# FASCICULE DE BREVET EUROPEEN

(11) **EP 1 847 958 B1**
(45) Date de publication et mention de la délivrance du brevet: **19.03.2014**
(21) Numéro de dépôt: 07300939.1
(22) Date de dépôt: 06.04.2007
(51) Int. Cl.: G06T 5/00, G06T 5/50

(54) **Segmentation d'image numérique d'une zone d'observation en temps réel**
Echtzeitsegmentierung eines digitalen Bildes in einer Überwachungszone
Segmentation of a digital image of an observation area in real time

(30) Priorité: 14.04.2006 FR 0651357
(43) Date de publication de la demande: 24.10.2007
(73) Titulaire: Orange, 75015 Paris (FR)
(72) Inventeur: Gachignard, Olivier, 92120, Montrouge (FR); Schmitt, Jean-Claude, 91600, Savigny S/orge 91600 (FR)
(74) Mandataire: Regimbeau

(56) Documents cités:
- US-A1- 2002 122 605
- MALASSIOTIS S ET AL: "Face Localization and Authentication Using Color and Depth Images" IEEE TRANSACTIONS ON IMAGE PROCESSING, IEEE SERVICE CENTER, PISCATAWAY, NJ, US, vol. 14, no. 2, février 2005 (2005-02), pages 152-168, XP011124977 ISSN: 1057-7149
- AHUJA N ET AL: "Detecting faces in images: a survey" IEEE TRANSACTIONS ON PATTERN ANALYSIS AND MACHINE INTELLIGENCE, IEEE SERVICE CENTER, LOS ALAMITOS, CA, US, vol. 24, no. 1, 1 janvier 2002 (2002-01-01), pages 34-58, XP011094133 ISSN: 0162-8828
- AGLIKA GYAOUROVA ET AL: "Fusion of Infrared and Visible Images for Face Recognition" 16 avril 2004 (2004-04-16), COMPUTER VISION - ECCV 2004; [LECTURE NOTES IN COMPUTER SCIENCE;;LNCS], SPRINGER-VERLAG, BERLIN/HEIDELBERG, PAGE(S) 456 - 468 , XP019005940 ISBN: 9783540219811 * le document en entier *

## Description

La présente invention concerne une segmentation d'image numérique d'une zone d'observation capturée par un dispositif de capture d'image visible, tel qu'une caméra vidéo, en temps réel. Plus particulièrement, elle a trait à un affichage d'un objet ou d'une personne extrait de l'image de la zone d'observation.

Dans le domaine de la visioconférence ou de la visiophonie, des utilisateurs ne souhaitent généralement pars montrer d'image de leur environnement intime en utilisant un dispositif de capture d'image tel qu'une caméra ou une webcaméra ("webcam" en anglais). Cette réticence des utilisateurs peut constituer un frein psychologique à l'utilisation de la visiophonie à domicile.

Par ailleurs, dans le domaine des radiocommunications, un utilisateur possédant un terminal mobile équipé d'une caméra miniature transmet à un autre utilisateur possédant un terminal mobile un message visiophonique incluant une image composée essentiellement d'une partie utile correspondant par exemple à la silhouette ou au visage de l'utilisateur. Le débit d'information nécessaire à la transmission du message à travers le réseau pourrait alors être réduit en ne transmettant que la partie d'image utile et en supprimant le reste de l'image correspondant par exemple au décor dans lequel se trouve l'utilisateur. Un terminal de visiophonie capable d'extraire le visage de l'utilisateur dans une image capturée et d'insérer le visage dans une image d'arrière-plan enregistrée est divulgué dans la demande de brevet US 2002/0122605 Al.

Dans l'état de la technique, il existe des systèmes qui utilisent des projections d'ondes électromagnétiques en infrarouge dans une scène particulière et analysent les ondes projetées afin de faire une distinction entre des personnes et des objets. Cependant, ces systèmes requièrent une installation complexe et coûteuse, inadaptée à des applications en temps réel, telles que la visioconférence.

Par ailleurs, le document "Face Localization and Authentication Using Color and Depth Images", Tsalakanidou et al., IEEE TRANSACTIONS ON IMAGE PROCESSING, IEEE SERVICE CENTER, PISCATAWAY, NJ, US, vol.14, no. 2, février 2005, divulgue un procédé pour localiser et authentifier le visage d'un utilisateur dans une zone d'observation par des acquisitions alternées d'une image en couleurs en deux dimensions et d'une image de profondeur en trois dimensions. L'image de profondeur est acquise au moyen d'une caméra capturant des déformations d'un motif de lumière codée par des couleurs projeté par un projecteur sur des objets dans la zone d'observation. L'image en couleurs est acquise au moyen de la caméra lorsque la zone d'observation est éclairée par un motif de lumière blanche projeté par le projecteur. Des opérations de traitement complexes sur l'image de profondeur sont nécessaires pour localiser un cadre incluant le visage dans l'image en couleurs et centré sur un point d'intersection d'axes de symétrie situé entre les yeux au-dessus du nez du visage.

Pour remédier aux inconvénients évoqués ci-dessus, un procédé selon l'invention pour segmenter en temps réel une première image numérique d'une zone d'observation capturée par un système de capture d'image qui capture également une deuxième image numérique de la zone d'observation, est tel que caractérisé dans la revendication 1.

Avantageusement, l'invention fournit une image segmentée affichant seulement une partie d'image qu'un utilisateur du dispositif informatique souhaite transmettre à un interlocuteur avec lequel il communique par exemple au cours d'une visioconférence. Généralement la partie d'image affichée représente l'utilisateur et le décor dans lequel se trouve l'utilisateur est supprimé dans l'image segmentée.

La partie d'image requiert moins de débit pour être transmise audit interlocuteur, ce qui libère de la bande passante pour transmettre en temps réel une séquence vidéo comprenant une succession d'images segmentées.

Par ailleurs, la segmentation selon l'invention ne requiert pas un décor particulier dans la zone d'observation, tel qu'un fond monochrome classiquement bleu, et peut donc être exécutée sans contraintes dans un lieu quelconque.

Selon une autre caractéristique de l'invention, le procédé peut comprendre en outre une actualisation des grandeurs associées à des pixels de la deuxième image relatifs à des points de la zone d'observation dont la position a changé.

L'actualisation des grandeurs prend en compte le mouvement des objets dans la zone d'observation afin que l'image segmentée corresponde toujours à la partie d'image que l'utilisateur souhaite transmettre.

Selon une autre caractéristique de l'invention, la grandeur associée à un pixel de la deuxième image est une distance entre un point de la zone d'observation et le système de capture d'image. Selon d'autres réalisations de l'invention, la grandeur associée à un pixel de la deuxième image est un niveau de luminance dépendant de la matière des objets situés dans la zone d'observation ou de la chaleur dégagée par ces objets.

Selon une autre caractéristique de l'invention, le procédé peut comprendre une détermination d'un seuil de distance dans la deuxième image par rapport au système, les pixels de la deuxième image correspondant aux pixels sélectionnés de la première image étant associés à des distances inférieures au seuil de distance.

Lorsque l'image segmentée représente l'utilisateur, le procédé comprend une actualisation des distances associées à des pixels de la deuxième image relatifs à des points de la zone d'observation dont la position a changé, et le seuil de distance est au moins égal à la distance actualisée la plus grande afin de suivre l'utilisateur quelle que soit sa position.

Selon une autre caractéristique de l'invention, le procédé peut comprendre en outre un établissement d'une correspondance entre des pixels de la première image et des pixels d'une troisième image numérique représentatifs de niveaux de luminance de la zone d'observation et une désélection des pixels de la première image qui sont associés à un niveau de luminance inférieur à un seuil prédéterminé.

La segmentation d'image selon l'invention prévoit de distinguer l'utilisateur par rapport à des objets de la zone d'observation susceptibles d'être à proximité de l'utilisateur, à l'aide de niveaux de luminance de la zone d'observation. L'image segmentée peut alors représenter seulement l'utilisateur bien que des objets soient situés entre l'observateur et le premier dispositif.

Selon une autre caractéristique de l'invention, le procédé peut comprendre en outre une construction d'un maillage volumique en fonction de l'image segmentée en associant des distances et des coordonnées d'un repère de l'image segmentée respectivement aux pixels de l'image segmentée afin de créer un objet virtuel à trois dimensions.

L'objet virtuel à trois dimensions ainsi créé peut être importé dans des décors virtuels à trois dimensions. Par exemple, l'objet virtuel représente l'utilisateur qui est incrusté dans des scènes d'un jeu vidéo.

Selon une autre caractéristique de l'invention, le procédé peut comprendre en outre une modification de l'image segmentée en insérant en arrière-plan de celle-ci une image de fond qui peut être une animation. L'image segmentée ainsi modifiée peut représenter l'utilisateur dans un décor sélectionné par l'utilisateur.

L'invention a également pour objet un système de capture d'image tel que défini dans la revendication 10.

Le système de capture d'image peut être inclus dans un terminal mobile.

L'invention concerne également un dispositif de segmentation tel que défini dans la revendication 11.

L'invention se rapporte encore à un programme d'ordinateur selon la revendication 12.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique d'un dispositif de segmentation d'image dans un système de capture d'image selon l'invention ; et
- la figure 2 est un algorithme d'un procédé de segmentation d'image selon l'invention.

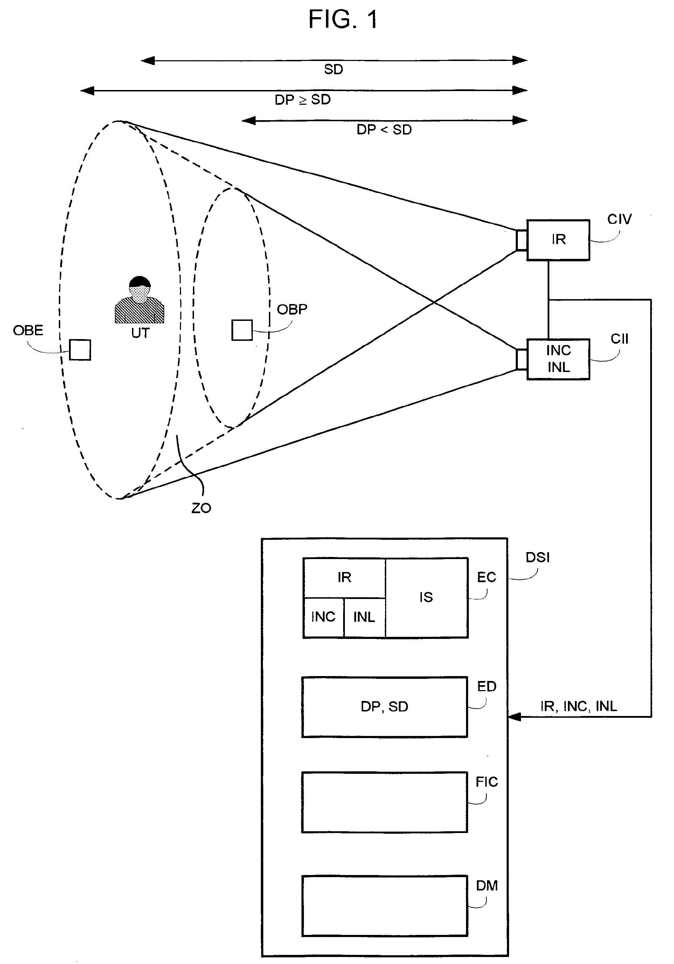

En référence à la figure 1, un système de capture d'image comprend un dispositif de capture d'image visible CIV, un dispositif de capture d'image invisible CII et un dispositif informatique de segmentation d'image DSI.

Le dispositif de capture d'image visible CIV et le dispositif de capture d'image invisible CII sont disposés face à un utilisateur UT situé dans une zone d'observation ZO. Les dispositifs CIV et CII sont réglés de manière à avoir une même focale et à capturer des images numériques relatives aux mêmes objets de la zone d'observation ZO. Les dispositifs de capture CIV et CII sont par exemple disposés côte-à-côte ou l'un au dessus de l'autre.

Le dispositif de capture d'image visible CIV, dit également dispositif de prise d'image, est par exemple un appareil photographique numérique, une caméra vidéo numérique, un caméscope ou une webcaméra.

Une image visible capturée selon l'invention est composée soit d'une image numérique capturée par un appareil photographique numérique par exemple, soit de plusieurs images numériques formant une séquence vidéo capturée par une caméra ou un caméscope par exemple. Le dispositif de capture d'image visible CIV transmet une image réelle numérique IR représentative de la zone d'observation ZO au dispositif de segmentation d'image DSI.

Le dispositif de capture d'image invisible CII comprend par exemple notamment des diodes électroluminescentes LED, un système optique et une matrice à transfert de charges CCD ("Charge Coupled Devices" en anglais). Les diodes sont disposées sous forme de matrice ou de barrette et émettent un faisceau d'ondes électromagnétiques dans le domaine invisible, tel que l'infrarouge, vers la zone d'observation ZO. Le système optique fait converger le faisceau émis par les diodes et réfléchi sur des surfaces d'objets de la zone d'observation, vers la matrice CCD.

Des éléments photosensibles de la matrice CCD sont respectivement associés à des condensateurs pour stocker des charges induites par l'absorption du faisceau par les éléments photosensibles. Les charges incluses dans les condensateurs sont alors converties notamment au moyen de transistors à effet de champ en des tensions exploitables par le dispositif de capture d'image invisible CII qui associe alors un niveau de luminance à chaque tension d'élément photosensible.

Les niveaux de luminance obtenus dépendent de l'énergie du faisceau d'ondes électromagnétiques absorbées, et par conséquent de la matière des objets sur lesquels est réfléchi le faisceau. Le dispositif de capture d'image invisible CII transmet alors au dispositif de segmentation d'image DSI un signal d'image monochrome numérique à niveaux de luminance INL. L'image numérique INL comprend un nombre prédéterminé de pixels selon une résolution de l'image numérique spécifique à la matrice CCD et chaque pixel est d'autant plus clair que le niveau de luminance du signal reçu est élevé.

Par ailleurs, le dispositif de capture d'image invisible CII est capable d'évaluer la distance à laquelle se trouve chaque objet de la zone d'observation ZO, par exemple en fonction du temps de propagation aller-retour mis par le faisceau d'ondes électromagnétiques entre l'instant où il a été émis et l'instant où il a été reçu par la matrice CCD. Un temps limite est par exemple prédéterminé afin d'éliminer les ondes électromagnétiques qui ont été réfléchies plusieurs fois. Le dispositif de capture d'image invisible CII transmet alors au dispositif de segmentation d'image DSI une image numérique à niveaux de couleur INC. Chaque pixel de l'image INC correspond à un point d'un objet de la zone d'observation ZO selon une résolution de l'image numérique spécifique à la matrice CCD, et la couleur d'un pixel appartient à une palette de couleur prédéterminée et est représentative d'une distance à laquelle se trouve le point correspondant au pixel.

Le dispositif de capture d'image invisible CII a par exemple une fréquence de rafraîchissement d'image de l'ordre de 50 ou 60 Hz correspondant à une fréquence de trame d'image dans le dispositif de capture d'image visible CIV, afin de capturer et restituer en temps réel une succession d'images numériques à une fréquence connue d'image de 25 ou 30 Hz en sortie du dispositif CIV.

En variante, une caméra thermique est utilisée à la place ou en complément du dispositif de capture d'image invisible CII pour obtenir une image numérique semblable à l'image à niveaux de luminance INL. La caméra thermique n'émet aucun faisceau électromagnétique et réagit à la température des objets de la zone d'observation, au moyen d'une matrice CCD sensible aux ondes infrarouges émises par des corps vivants qui dégagent de la chaleur. La caméra thermique distingue des corps vivants, tels que l'utilisateur, des corps non vivants, par la différence de chaleur qu'ils dégagent.

Le dispositif de segmentation d'image DSI est un dispositif informatique qui comprend un module d'estimation de distances ED, un module de fusion d'images capturées FIC, un détecteur de mouvement DM, et une interface d'utilisateur comportant un écran de visualisation EC et un clavier.

Par exemple, le dispositif de segmentation d'image DSI est un ordinateur personnel ou un terminal de radiocommunications cellulaire mobile.

Selon d'autres exemples, le dispositif de segmentation d'image DSI comprend un objet électronique de télécommunications qui peut être un assistant numérique personnel communicant PDA, ou un téléphone intelligent (SmartPhone). Plus généralement, le dispositif de segmentation d'image DSI peut être tout autre terminal domestique communicant portable ou non tel qu'une console de jeux vidéo, ou un récepteur de télévision intelligent coopérant avec une télécommande à afficheur, ou un clavier alphanumérique servant également de souris à travers une liaison infrarouge.

Par exemple, les dispositifs de capture CIV et CII sont reliés par l'intermédiaire de câbles USB au dispositif de segmentation d'image DSI qui est un ordinateur personnel.

Dans une variante, les dispositifs de capture CIV et CII sont inclus dans le dispositif de segmentation d'image DSI qui est par exemple un terminal de radiocommunications cellulaire mobile.

Dans une autre variante, les moyens fonctionnels des dispositifs de capture CIV et CII sont inclus dans un unique dispositif de capture d'image.

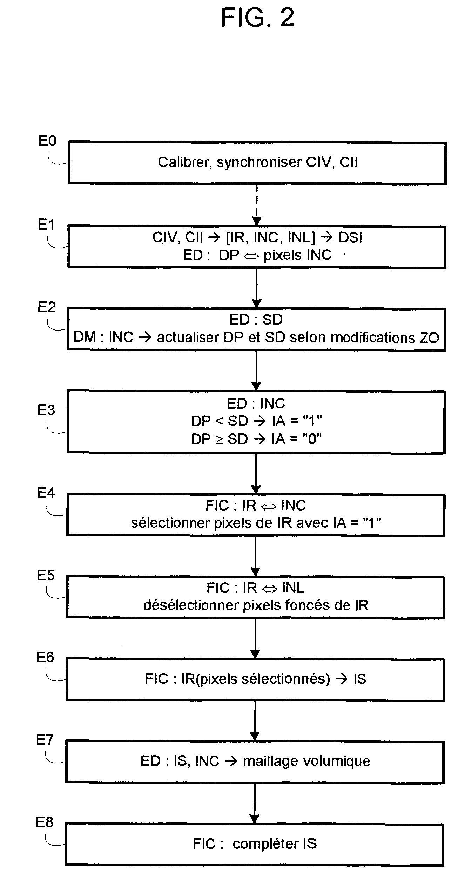

En référence à la figure 2, le procédé de segmentation d'image numérique selon l'invention comprend des étapes E1 à E8 exécutées automatiquement dans le système de capture d'image.

L'utilisateur UT, qui est situé dans la zone d'observation des dispositifs de capture d'image CIV et CII, communique par exemple de manière interactive avec un terminal d'interlocuteur distant au cours d'une visioconférence et souhaite transmettre à l'interlocuteur distant seulement une partie de l'image réelle IR capturée par le dispositif de capture d'image CIV. La partie d'image est une image segmentée représentant au moins partiellement l'utilisateur et la partie résiduelle de l'image réelle IR est supprimée ou remplacée par exemple par une image numérique, comme un fond d'écran fixe ou animé, pré-mémorisée dans le dispositif DSI et sélectionnée par l'utilisateur.

Les étapes du procédé sont exécutées pour chaque ensemble de trois images numériques IR, INC et INL capturées simultanément par les dispositifs de capture d'image CIV et CII, et par conséquent selon une fréquence de rafraîchissement des dispositifs CIV et CII, afin de transmettre en temps réel une séquence vidéo de l'utilisateur à l'interlocuteur.

A une étape initiale E0, les dispositifs de capture d'image CIV et CII sont calibrés et synchronisés : les focales des deux dispositifs sont réglées, mécaniquement et/ou électriquement, et des bases de temps dans les dispositifs sont mutuellement synchrones afin de capturer et restituer aux mêmes instants des images numériques relatives aux mêmes objets de la zone d'observation ZO, et des repères pour la visualisation des images numériques capturées coïncident. Par conséquent, si l'on superpose à un instant donné l'image capturée par le dispositif de capture d'image visible CIV à l'image capturée par le dispositif capture d'image invisible CII, les centres des images capturées sont confondus, et les dimensions des images d'un même objet sont respectivement proportionnelles dans les deux images.

A l'étape E1, les images capturées par les dispositifs de capture d'image CIV et CII, c'est-à-dire l'image réelle IR, l'image à niveaux de couleur INC et/ou l'image à niveaux de luminance INL, sont transmises au dispositif de segmentation d'image DSI qui restitue et affiche les images capturées sur l'écran de visualisation EC.

Par exemple, comme montré schématiquement dans la figure 1, dans trois fenêtres juxtaposées de l'écran EC sont affichées l'image réelle IR capturée par le dispositif de capture d'image visible CIV, et l'image à niveaux de couleur INC et l'image à niveaux de luminance INL capturées par le dispositif de capture d'image invisible CII.

L'image à niveaux de couleur INC est affichée selon une résolution prédéfinie, par exemple de 160 x 124 pixels, chaque pixel de l'image INC ayant une couleur dans une palette de couleurs, telle qu'une palette du spectre de la lumière, ou sélectionnée parmi quelques couleurs comme rouge, vert et bleu. Par exemple, un pixel ayant une couleur bleu foncé affiche un point d'un objet proche du dispositif de capture CII et un pixel ayant une couleur jaune ou rouge affiche un point d'un objet éloigné du dispositif de capture CII. Le module d'estimation de distances ED interprète les couleurs des pixels de l'image INC et associe des distances DP respectivement aux pixels de l'image INC.

L'image à niveaux de luminance INL est affichée également selon une résolution prédéfinie, par exemple de 160 x 124 pixels, chaque pixel de l'image INL ayant un niveau de luminance gris compris entre un niveau de blanc correspondant à une tension de luminance maximale et un niveau de noir correspondant à une tension de luminance minimale. Les pixels de l'image monochrome à niveaux de luminance INL sont plus clairs lorsqu'ils affichent un objet OBP de la zone d'observation qui est à proximité du dispositif CII et dont la surface réfléchit bien le faisceau d'ondes électromagnétiques émises par le dispositif CII. Par contre, les pixels de l'image INL sont plus foncés lorsqu'ils affichent un objet OBE de la zone d'observation qui est éloigné du dispositif CII et dont la surface réfléchit moins bien le faisceau d'ondes électromagnétiques émises par le dispositif CII. En effet, le niveau de luminance dans le signal transmis par la matrice CCD du dispositif de capture d'image invisible CII dépend de la matière des objets sur lesquels est réfléchi le faisceau émis par le dispositif CII. A chaque pixel de l'image INL est donc associé un niveau de luminance.

A l'étape E2, le module d'estimation de distances ED procède à un seuillage en déterminant un seuil de distance SD relatif à une calotte d'arrière-plan dans l'image à niveaux de couleur INC par rapport au dispositif de capture d'image invisible CII, et un seuil de luminance relativement faible dans l'image INL correspondant par exemple à des points de la zone ZO éloignés du système de capture.

Par exemple, le seuil de distance SD est prédéterminé et fixe. Le seuil de distance SD peut être égal à une distance d'environ un mètre afin de couvrir la majeure partie des possibilités de positions de l'utilisateur devant le dispositif de capture d'image invisible CII.

Selon un autre exemple, le détecteur de mouvement DM détecte des changements de position et notamment des déplacements d'objet ou de points de la zone d'observation ZO et plus particulièrement toute modification de distances associées aux pixels de l'image à niveaux de couleur INC. Bien souvent les objets dans la zone d'observation sont fixes et l'utilisateur est en mouvement constant ; seuls des mouvements de l'utilisateur UT sont détectés et le module d'estimation ED actualise les distances DP associées aux pixels relatifs à une partie de l'image à niveaux de couleur INC représentant l'utilisateur par comparaisons successives des images capturées deux à deux consécutives. Le module d'estimation de distances ED adapte alors le seuil de distance SD aux distances actualisées par le détecteur de mouvement DM et le seuil de distance est au moins égal à la distance actualisée la plus grande. Cette adaptation du seuil de distance SD évite que des pixels correspondant à des parties de l'utilisateur telles qu'un bras ou une main soient associés à des distances excédant le seuil de distance et par conséquent ne soient pas affichés.

Par ailleurs, le module d'estimation de distances ED fixe une limite à la valeur que peut prendre le seuil de distance SD. Par exemple, le seuil de distance ne peut excéder une distance de deux à trois mètres du dispositif de capture d'image CII, afin d'ignorer des mouvements qui ne sont pas relatifs à l'utilisateur, comme l'entrée d'une personne dans la zone d'observation ZO où se trouve l'utilisateur.

A l'étape E3, le module d'estimation ED attribue un indicateur d'affichage IA de type booléen à chaque pixel de l'image INC. En particulier, un indicateur d'affichage IA à l'état logique "0" est attribué à chaque pixel associé à une distance DP supérieure ou égale au seuil de distance SD et un indicateur d'affichage IA à l'état logique "1" est attribué à chaque pixel associé à une distance DP inférieure au seuil de distance SD.

Lorsqu'au moins deux images à niveaux de couleur INC ont été capturées et transmises au dispositif de segmentation d'image DSI, le module d'estimation de distances ED modifie les états des indicateurs d'affichage IA attribués aux pixels dont les distances ont été actualisées.

Selon l'exemple avec une palette de couleur rouge-vert-bleu, si le seuil de distance DS vaut un mètre et l'utilisateur est situé à moins d'un mètre du dispositif de capture d'image invisible CII sans qu'il n'y ait d'objet à proximité de l'utilisateur UT, la forme de l'utilisateur est affichée en bleu foncé et un indicateur d'affichage IA à l'état logique "1" est attribué à tous les pixels relatifs à l'utilisateur, tandis qu'un indicateur d'affichage IA à l'état logique "0" est attribué à tous les autres pixels relatifs à la zone d'observation affichée de couleur bleu clair à rouge.

A l'étape E4, le module de fusion d'images capturées FIC établit une correspondance entre les pixels de l'image à niveaux de couleur INC et les pixels de l'image réelle IR. Puisque les centres des images capturées INC et IR sont confondus et les dimensions des objets dans les images INC et IR sont proportionnelles, un pixel de l'image à niveaux de couleur INC correspond à un nombre entier de pixels de l'image réelle IR, selon les résolutions des images INC et IR.

Le module de fusion d'images capturées FIC sélectionne les pixels de l'image réelle IR correspondant aux pixels de l'image à niveaux de couleur INC auxquels est attribué un indicateur d'affichage IA à l'état logique "1", c'est-à-dire les pixels associés à des distances DP inférieures au seuil de distance SD. D'autre part, le module FIC ne sélectionne pas les autres pixels de l'image réelle IR correspondant aux pixels de l'image à niveaux de couleur INC auxquels est attribué un indicateur d'affichage IA à l'état logique "0", c'est-à-dire les pixels associés à des distances DP supérieures ou égales au seuil de distance SD.

Les pixels de l'image réelle IR sélectionnés sont alors relatifs à l'utilisateur UT et éventuellement à des objets situés à proximité de l'utilisateur.

A l'étape optionnelle E5, le module de fusion d'images capturées FIC établit également une correspondance entre les pixels de l'image réelle IR et les pixels de l'image à niveaux de luminance INL. De même que pour l'image à niveaux de couleur INC, un pixel de l'image à niveaux de luminance INL correspond à un nombre entier de pixels de l'image réelle IR, selon les résolutions des images INL et IR. En général, puisqu'un niveau de luminance est associé à chaque pixel de l'image INL et le niveau de luminance dépend de la matière des objets sur lesquels est réfléchi le faisceau d'ondes électromagnétiques, seuls les pixels affichant des parties de l'utilisateur UT sont clairs et les pixels affichant la partie résiduelle de la zone d'observation sont très foncés ou noirs.

Le module de fusion d'images capturées FIC effectue une corrélation entre les pixels de l'image réelle IR sélectionnés à partir de l'image à niveaux de couleur INC et les pixels de l'image réelle IR sélectionnés à partir de l'image à niveaux de luminance INL, afin de distinguer des groupes de pixels sélectionnés de l'image réelle IR qui représentent l'utilisateur par rapport à des groupes pixels de l'image réelle IR qui représentent un ou des objets. Le module de fusion d'images capturées FIC désélectionne alors les groupes de pixels de l'image réelle IR qui sont associés à un niveau de luminance inférieur au seuil de luminance prédéterminé, tels que les pixels foncés ou noirs affichant un objet ou des objets. Par conséquent, seuls les pixels de l'image réelle IR relatifs à l'utilisateur UT sont sélectionnés et tout objet situé à proximité de l'utilisateur est ignoré.

L'étape E5 peut être exécutée avant ou en même temps que l'étape E4. A l'issue des étapes E4 et E5, le module de fusion d'images capturées FIC affiche à l'étape E6 sur l'écran EC seulement les pixels sélectionnés de l'image réelle IR pour former une image segmentée IS, la partie résiduelle de l'image réelle étant par exemple affiché sous la forme d'un fond monochrome, par exemple en noir. L'image réelle IR est alors découpée en l'image segmentée IS qui présente sur l'écran EC seulement des parties de la zone d'observation ZO relatives à l'utilisateur.

Si l'étape E5 n'est pas exécutée, l'image segmentée IS présente sur l'écran EC des parties de la zone d'observation relatives à l'utilisateur et éventuellement à des objets situés à proximité de l'utilisateur.

L'utilisation des deux images INC et INL est nécessaire pour préciser le contour de l'image de l'utilisateur dans une image segmentée. En effet, l'image à niveaux de couleur INC distingue les parties de l'utilisateur UT et des objets à proximité de l'utilisateur du reste de la zone d'observation, mais de manière imprécise puisque des parties de l'utilisateur telles que les cheveux ne sont pas distinctement affichées, tandis que l'image à niveaux de luminance INL distingue précisément toutes les parties de l'utilisateur UT, y compris les cheveux, de tout objet de la zone d'observation. Dans ce cas particulier pour distinguer les cheveux, le module de fusion d'images capturées FIC peut sélectionner des pixels dans l'image réelle IR qui n'ont pas été sélectionnés par le module de fusion FIC à l'étape E4 et auxquels est attribué un indicateur d'affichage IA à l'état logique "0". Les pixels sélectionnés sont alors relatifs à l'utilisateur et associés à un niveau de luminance supérieur au seuil de luminance prédéterminé.

A l'étape optionnelle E7, le module d'estimation de distances ED construit un maillage volumique en fonction de l'image à niveaux de couleur INC ou de l'image segmentée IS. Un pixel de l'image à niveaux de couleur INC est associé à une distance DP et correspond à un nombre de pixels de l'image réelle IR et donc de l'image segmentée IS. Par conséquent ledit nombre de pixels de l'image segmentée IS est également associé à la distance DP. Tous les pixels affichés de l'image segmentée IS, ou de manière plus générale tous les pixels de l'image réelle IR auxquels est attribué un indicateur d'affichage IA à l'état logique "1", sont associés respectivement à des distances DP et implicitement à des coordonnées du repère de l'image segmentée IS. Le module d'estimation de distances ED exporte l'image segmentée IS, plus particulièrement les distances et coordonnées des pixels affichés, dans un fichier numérique pour créer un objet virtuel à trois dimensions. En effet, tous les pixels relatifs à l'utilisateur ont trois coordonnées et définissent une représentation à trois dimensions de l'utilisateur.

La construction du maillage volumique permet donc de créer des objets à trois dimensions manipulables et utilisables pour différentes applications, telles que des jeux vidéo ou des animations virtuelles.

A l'étape E8, le module de fusion d'images capturées FIC modifie l'image segmentée IS en insérant en arrière-plan de l'image segmentée IS une image de fond fixe ou animée sélectionnée au préalable par l'utilisateur UT, afin que l'utilisateur apparaisse par exemple dans un décor virtuel ou au premier plan d'une photo appropriée à sujet particulier.

Le dispositif de segmentation d'image DSI transmet alors l'image segmentée modifiée à un terminal de l'interlocuteur avec lequel l'utilisateur communique via une visioconférence.

Les étapes E1 à E8 étant répétées automatiquement pour chacune des images capturées par les dispositifs CIV et CII par exemple à une fréquence d'image de l'ordre de 50 ou 60 Hz, l'interlocuteur visualise en temps réel une séquence vidéo comprenant les images segmentées modifiées selon le souhait de l'utilisateur.

L'invention décrite ici concerne un procédé et un dispositif de segmentation pour segmenter une première image numérique d'une zone d'observation ZO, telle que l'image réelle IR, capturée par un premier dispositif de capture, tel que le dispositif de capture d'image visible CIV et transmise au dispositif de segmentation. Selon une implémentation préférée, les étapes du procédé de l'invention sont déterminées par les instructions d'un programme d'ordinateur incorporé dans un dispositif informatique tel que le dispositif de segmentation d'image DSI selon l'invention. Le programme comporte des instructions de programme qui, lorsque ledit programme est exécuté dans un processeur du dispositif informatique dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'informations lisible par un dispositif informatique, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage ou support d'enregistrement sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

## Revendications

1. Procédé pour segmenter en temps réel une première image numérique (IR) d'une zone d'observation (ZO) capturée par un système de capture d'image (CIV, CII, DSI) qui capture également une deuxième image numérique (INC) de la zone d'observation, **caractérisé en ce qu'**il comprend les étapes suivantes dans le système de capture d'image :
capturer (E0) simultanément les première et deuxième images, les dimensions des images d'un même objet de la zone d'observation étant respectivement proportionnelles dans les première et deuxième images,
établir (E4) une correspondance entre des pixels de la première image (IR) et les pixels de la deuxième image (INC) et sélectionner des pixels de la première image correspondant à des pixels de la deuxième image en fonction de grandeurs (DP) associées à ces derniers,
établir (E5) une correspondance entre des pixels de la première image (IR) et des pixels d'une troisième image numérique (INL) représentatifs de niveaux de luminance de la zone d'observation (ZO) et désélectionner des pixels de la première image qui sont associés à un niveau de luminance inférieur à un seuil prédéterminé et
afficher (E6) seulement les pixels sélectionnés de la première image (IR) pour former une image segmentée (IS).

2. Procédé conforme à la revendication 1, comprenant en outre une actualisation des grandeurs (DP) associées à des pixels de la deuxième image (INC) relatifs à des points de la zone d'observation dont la position a changé.

3. Procédé conforme à la revendication 1 ou 2, selon lequel la grandeur (DP) associée à un pixel de la deuxième image est une distance entre un point de la zone d'observation et le système de capture d'image.

4. Procédé conforme à la revendication 3, comprenant en outre une détermination (E2) d'un seuil de distance (SD) dans la deuxième image par rapport au système, les pixels de la deuxième image correspondant aux pixels sélectionnés de la première image étant associés à des distances (DP) inférieures au seuil de distance.

5. Procédé conforme à la revendication 4, comprenant une actualisation des distances (DP) associées à des pixels de la deuxième image (IR) relatifs à des points de la zone d'observation dont la position a changé, le seuil de distance (SD) étant au moins égal à la distance actualisée (DP) la plus grande.

6. Procédé conforme à l'une quelconque des revendications 1 à 5, comprenant une construction (E7) d'un maillage volumique en fonction de l'image segmentée (IS) en associant des distances et des coordonnées d'un repère de l'image segmentée (IS) respectivement aux pixels de l'image segmentée afin de créer un objet virtuel à trois dimensions.

7. Procédé conforme à l'une quelconque des revendications 1 à 6, comprenant en outre une modification (E8) de l'image segmentée (IS) en insérant en arrière-plan de celle-ci une image de fond.

8. Procédé conforme à l'une quelconque des revendications 1 à 7, selon lequel un utilisateur du système de capture d'image (CIV, CII, DSI) dans la zone d'observation est en communication interactive avec un terminal distant auquel est transmise l'image segmentée (IS) représentant au moins partiellement l'utilisateur.

9. Système de capture d'image (CIV, CII, DSI) pour segmenter en temps réel une première image numérique (IR) d'une zone d'observation (ZO), comprenant un premier dispositif (CIV) pour capturer la première image numérique et un deuxième dispositif (CII) pour capturer une deuxième image numérique (INC) de la zone d'observation, **caractérisé en ce que** les premiers et deuxièmes dispositifs sont aptes à capturer simultanément les première et deuxième images, les dimensions des images d'un même objet de la zone d'observation étant respectivement proportionnelles dans les première et deuxième images, et **en ce que** le système de capture comprend :
- un moyen (FIC) pour établir une correspondance entre des pixels de la première image (IR) et les pixels de la deuxième image (INC) et sélectionner des pixels de la première image correspondant à des pixels de la deuxième image en fonction de grandeurs (DP) associées à ces derniers,
- un moyen pour établir une correspondance entre des pixels de la première image (IR) et des pixels d'une troisième image numérique (INL) représentatifs de niveaux de luminance de la zone d'observation (ZO) et pour désélectionner des pixels de la première image qui sont associés à un niveau de luminance inférieur à un seuil prédéterminé, et
- un moyen (FIC, EC) pour afficher seulement les pixels sélectionnés de la première image (IR) pour former une image segmentée (IS).

10. Terminal incluant un système de capture d'image selon la revendication 9.

11. Dispositif de segmentation (DSI) pour segmenter en temps réel une première image numérique (IR) d'une zone d'observation (ZO) capturée par un premier dispositif de capture (CIV) et transmise au dispositif de segmentation (DSI), une deuxième image numérique (INC) de la zone d'observation étant capturée et transmise par un deuxième dispositif de capture (CII) au dispositif de segmentation (DSI), **caractérisé en ce que** les premier et deuxième dispositifs étant aptes à capturer simultanément les première et deuxième images, et les dimensions des images d'un même objet de la zone d'observation étant respectivement proportionnelles dans les première et deuxième images, le dispositif de segmentation comprend :
- un moyen (FIC) pour établir une correspondance entre des pixels de la première image (IR) et les pixels de la deuxième image (INC) et sélectionner des pixels de la première image correspondant à des pixels de la deuxième image en fonction de grandeurs (DP) associées à ces derniers,
- un moyen pour établir une correspondance entre des pixels de la première image (IR) et des pixels d'une troisième image numérique (INL) représentatifs de niveaux de luminance de la zone d'observation (ZO) et pour désélectionner des pixels de la première image qui sont associés à un niveau de luminance inférieur à un seuil prédéterminé, et
- un moyen (FIC, EC) pour afficher seulement les pixels sélectionnés de la première image (IR) pour former une image segmentée (IS).

12. Programme d'ordinateur qui, lorsqu'il est executé par un ordinateur, met en oeuvre un procédé selon une des revendications 1-8.

13. Support d'enregistrement lisible par un dispositif de segmentation (DSI) sur lequel est enregistré un programme d'ordinateur selon la revendication 12.

## Patentansprüche

1. Verfahren zum Segmentieren in Echtzeit eines ersten digitalen Bildes (IR) einer Beobachtungszone (ZO), das von einem Bildaufnahmesystem (CIV, CII, DSI) aufgenommen wird, das außerdem ein zweites digitales Bild (INC) der Beobachtungszone aufnimmt, **dadurch gekennzeichnet, dass** es in dem Bildaufnahmesystem die folgenden Schritte umfasst:
Aufnehmen (E0) gleichzeitig des ersten und des zweiten Bildes, wobei die Abmessungen der Bilder desselben Gegenstands der Beobachtungszone in dem ersten bzw. in dem zweiten Bild proportional sind,
Herstellen (E4) einer Entsprechung zwischen den Pixeln des ersten Bildes (IR) und den Pixeln des zweiten Bildes (INC) und Auswählen von Pixeln des ersten Bildes, die Pixeln des zweiten Bildes entsprechen, als Funktion von Größen (DP), die diesen Letzteren zugeordnet sind,
Herstellen (E5) einer Entsprechung zwischen Pixeln des ersten Bildes (IR) und Pixeln eines dritten digitalen Bildes (INL), die einen Luminanzpegel der Beobachtungszone (ZO) repräsentieren, und Aufheben der Auswahl der Pixel des ersten Bildes, denen ein Luminanzpegel zugeordnet ist, der kleiner als ein vorgegebener Schwellenwert ist, und
Anzeigen (E6) nur der ausgewählten Pixel des ersten Bildes (IR), um ein segmentiertes Bild (IS) zu erzeugen.

2. Verfahren nach Anspruch 1, das außerdem eine Aktualisierung der Größen (DP), die Pixeln des zweiten Bildes (INC) zugeordnet sind, in Bezug auf Punkte der Beobachtungszone, deren Position sich geändert hat, umfasst.

3. Verfahren nach Anspruch 1 oder 2, wobei die Größe (DP), die einem Pixel des zweiten Bildes zugeordnet ist, ein Abstand zwischen einem Punkt der Beobachtungszone und dem Bildaufnahmesystem ist.

4. Verfahren nach Anspruch 3, das außerdem eine Bestimmung (E2) eines Abstandsschwellenwerts (SD) in dem zweiten Bild in Bezug auf das System umfasst, wobei den Pixeln des zweiten Bildes, die gewählten Pixeln des ersten Bildes entsprechen, Abstände (DP) zugeordnet werden, die kleiner als der Schwellenabstand sind.

5. Verfahren nach Anspruch 4, das eine Aktualisierung der Abstände (DP), die Pixeln des zweiten Bildes (IR) zugeordnet sind, in Bezug auf Punkte der Beobachtungszone, deren Position sich geändert hat, umfasst, wobei der Schwellenabstand (SD) wenigstens gleich dem größten aktualisierten Abstand (DP) ist.

6. Verfahren nach einem der Ansprüche 1 bis 5, das das Konstruieren (E7) eines räumlichen Gitters als Funktion des segmentierten Bildes (IS) durch Zuordnen von Abständen und Koordinaten eines Bezugssystems des segmentierten Bildes (IS) zu jeweiligen Pixeln des segmentierten Bildes umfasst, um einen virtuellen Gegenstand mit drei Dimensionen zu erzeugen.

7. Verfahren nach einem der Ansprüche 1 bis 6, das außerdem eine Modifikation (E8) des segmentierten Bildes (IS) durch Einfügen eines Hintergrundbildes in seinen Hintergrund umfasst.

8. Verfahren nach einem der Ansprüche 1 bis 7, wobei ein Anwender des Bildaufnahmesystems (CIV, CII, DSI) in der Beobachtungszone in einer interaktiven Kommunikation mit einem entfernten Endgerät steht, an das das segmentierte Bild (IS), das den Anwender wenigstens teilweise repräsentiert, übertragen wird.

9. Bildaufnahmesystem (CIV, CII, DSI) zum Segmentieren in Echtzeit eines ersten digitalen Bildes (IR) einer Beobachtungszone (ZO), das eine erste Vorrichtung (CIV) zum Aufnehmen des ersten digitalen Bildes und eine zweite Vorrichtung (CII) zum Aufnehmen eines zweiten digitalen Bildes (INC) der Beobachtungszone umfasst, **dadurch gekennzeichnet, dass** die erste und die zweite Vorrichtung gleichzeitig das erste und das zweite Bild aufnehmen können, wobei die Abmessungen der Bilder desselben Objekts der Beobachtungszone in dem ersten bzw. in dem zweiten Bild proportional sind, und dass das Aufnahmesystem Folgendes umfasst:
- ein Mittel (FIC) zum Herstellen einer Entsprechung zwischen Pixeln des ersten Bildes (IR) und den Pixeln des zweiten Bildes (INC) und zum Auswählen der Pixel des ersten Bildes, die Pixeln des zweiten Bildes entsprechen, als Funktion von Größen (DP), die diesen Letzteren zugeordnet sind,
- ein Mittel zum Herstellen einer Entsprechung zwischen Pixeln des ersten Bildes (IR) und Pixeln eines dritten digitalen Bildes (INL), die den Luminanzpegel der Beobachtungszone (ZO) repräsentieren, und zum Aufheben der Auswahl der Pixel des ersten Bildes, denen ein Luminanzpegel zugeordnet ist, der niedriger als ein vorgegebener Schwellenwert ist, und
- ein Mittel (FIC, EC) zum Anzeigen nur der ausgewählten Pixel des ersten Bildes (IR), um ein segmentiertes Bild (IS) zu erzeugen.

10. Endgerät, das ein Bildaufnahmesystem nach Anspruch 9 enthält.

11. Segmentierungsvorrichtung (DSI) zum Segmentieren in Echtzeit eines ersten digitalen Bildes (IR) einer Beobachtungszone (ZO), das von einer ersten Aufnahmevorrichtung (CIV) aufgenommen wird und an die Segmentierungsvorrichtung (DSI) übertragen wird, wobei ein zweites digitales Bild (INC) der Beobachtungszone von einer zweiten Aufnahmevorrichtung (CII) aufgenommen und an die Segmentierungsvorrichtung (DSI) übertragen wird, **dadurch gekennzeichnet, dass** die erste und die zweite Vorrichtung das erste und das zweite Bild gleichzeitig aufnehmen können und die Abmessungen der Bilder desselben Objekts der Beobachtungszone in dem ersten bzw. in dem zweiten Bild proportional sind, wobei die Segmentierungsvorrichtung Folgendes umfasst:
- ein Mittel (FIC) zum Herstellen einer Entsprechung zwischen Pixeln eines ersten Bildes (IR) und Pixeln des zweiten Bildes (INC) und zum Auswählen von Pixeln des ersten Bildes, die Pixeln des zweiten Bildes entsprechen, als Funktion von Größen (DP), die diesen Letzteren zugeordnet sind,
- ein Mittel zum Herstellen einer Entsprechung zwischen Pixeln des ersten Bildes (IR) und Pixeln eines dritten digitalen Bildes (INL), die einen Luminanzpegel der Beobachtungszone (ZO) repräsentieren, und zum Aufheben der Auswahl der Pixel des ersten Bildes, denen ein Luminanzpegel zugeordnet ist, der niedriger als ein vorgegebener Schwellenwert ist, und
- ein Mittel (FIC, EC) zum Anzeigen nur der ausgewählten Pixel des ersten Bildes (IR), um ein segmentiertes Bild (IS) zu erzeugen.

12. Computerprogramm, das dann, wenn es von einem Computer ausgeführt wird, ein Verfahren nach einem der Ansprüche 1-8 ausführt.

13. Aufzeichnungsträger, der von einer Segmentierungsvorrichtung (DSI) gelesen werden kann und auf dem ein Computerprogramm nach Anspruch 12 aufgezeichnet ist.

## Claims

1. Method for segmenting in real time a first digital image (IR) of an observation area (ZO) captured by an image capture system (CIV, CII, DSI) which also captures a second digital image (INC) of the observation area, **characterized in that** it comprises the following steps in the image capture system:
simultaneously capturing (E0) the first and second images, the dimensions of the images of one and the same object of the observation area being respectively proportional in the first and second images,
establishing (E4) a correspondence between the pixels of the first image (IR) and the pixels of the second image (INC) and selecting pixels of the first image that correspond to pixels of the second image as a function of quantities (DP) associated therewith,
establishing (E5) a correspondence between pixels of the first image (IR) and pixels of a third digital image (INL) that are representative of luminance levels of the observation area (ZO) and deselecting pixels of the first image which are associated with a luminance level below a predetermined threshold and
displaying (E6) only the pixels selected from the first image (IR) to form a segmented image (IS).

2. Method according to Claim 1, also comprising an updating of the quantities (DP) associated with pixels of the second image (INC) relating to points of the observation area whose position has changed.

3. Method according to Claim 1 or 2, according to which the quantity (DP) associated with a pixel of the second image is a distance between a point of the observation area and the image capture system.

4. Method according to Claim 3, also comprising a determination (E2) of a distance threshold (SD) in the second image relative to the system, the pixels of the second image corresponding to the selected pixels of the first image that are associated with distances (DP) less than the distance threshold.

5. Method according to Claim 4, comprising an updating of the distances (DP) associated with pixels of the second image (IR) relating to points of the observation area whose position has changed, the distance threshold (SD) being at least equal to the greatest updated distance (DP).

6. Method according to any one of Claims 1 to 5, comprising a construction (E7) of a volume meshing according to the segmented image (IS) by associating distances and coordinates of a reference frame of the segmented image (IS) respectively with the pixels of the segmented image in order to create a three-dimensional virtual object.

7. Method according to any one of Claims 1 to 6, also comprising a modification (E8) of the segmented image (IS) by inserting a background image into the background thereof.

8. Method according to any one of Claims 1 to 7, according to which a user of the image capture system (CIV, CII, DSI) in the observation area is in interactive communication with a remote terminal to which the segmented image (IS) at least partially representing the user is transmitted.

9. Image capture system (CIV, CII, DSI) for segmenting in real time a first digital image (IR) of an observation area (ZO), comprising a first device (CIV) for capturing the first digital image and a second device (CII) for capturing a second digital image (INC) of the observation area, **characterized in that** the first and second devices are able to simultaneously capture the first and second images, the dimensions of the images of one and the same object of the observation area being respectively proportional in the first and second images, and **in that** the capture system comprises:
- a means (FIC) for establishing a correspondence between pixels of the first image (IR) and the pixels of the second image (INC) and selecting pixels of the first image that correspond to pixels of the second image as a function of quantities (DP) associated therewith,
- a means for establishing a correspondence between pixels of the first image (IR) and pixels of a third digital image (INL) that are representative of luminance levels of the observation area (ZO) and for deselecting pixels of the first image which are associated with a luminance level below a predetermined threshold, and
- a means (FIC, EC) for displaying only the selected pixels of the first image (IR) to form a segmented image (IS).

10. Terminal including an image capture system according to Claim 9.

11. Segmentation device (DSI) for segmenting in real time a first digital image (IR) of an observation area (ZO) captured by a first capture device (CIV) and transmitted to the segmentation device (DSI), a second digital image (INC) of the observation area being captured and transmitted by a second capture device (CII) to the segmentation device (DSI), **characterized in that** the first and second device are able to simultaneously capture the first and second images, and the dimensions of the images of one and the same object of the observation area being respectively proportional in the first and second images, the segmentation device comprises:
- means (FIC) for establishing a correspondence between pixels of the first image (IR) and the pixels of the second image (INC) and selecting pixels of the first image that correspond to pixels of the second image as a function of quantities (DP) associated therewith,
- a means for establishing a correspondence between pixels of the first image (IR) and pixels of a third digital image (INL) that are representative of luminance levels of the observation area (ZO) and for deselecting pixels of the first image which are associated with a luminance level below a predetermined threshold, and
- a means (FIC, EC) for displaying only the selected pixels of the first image (IR) to form a segmented image (IS).

12. Computer program which, when it is executed by a computer, implements a method according to one of Claims 1 to 8.

13. Storage medium that can be read by a segmentation device (DSI) on which is stored a computer program according to Claim 12.
